(19) Europäisches Patentamt

European Patent Office

Office européen des brevets

(11) **EP 0 978 536 A1**

(12) **EUROPEAN PATENT APPLICATION**

(43) Date of publication:
**09.02.2000 Bulletin 2000/06**

(51) Int Cl.[7]: **C08L 25/06**, C08L 51/00, C08K 5/17, C08K 5/09

(21) Application number: **99114051.8**

(22) Date of filing: **20.07.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **05.08.1998 IT MI981844**

(71) Applicant: **Enichem S.p.A.**
**20097 S. Donato Milanese (Milano) (IT)**

(72) Inventors:
• **Po', Riccardo**
**Livorno (IT)**
• **Giannotta, Giorgio**
**Novara (IT)**

(74) Representative: **Gennari, Marco, Dr.**
**c/o EniTecnologie S.p.A.,**
**BREL,**
**Via F. Maritano, 26**
**20097 San Donato Milanese, Milano (IT)**

(54) **Polymeric compositions with a high toughness based on vinylaromatic polymers with a predominantly syndiotactic structure**

(57) Polymeric compositions having a high toughness based on vinylaromatic polymers with a syndiotactic structure which comprise:

i) 50-95% by weight of a syndiotactic vinylaromatic polymer;
ii) 5-45% by weight, of a polar elastomer containing a monomer having epoxy, anhydride and/or carboxylic functional groups;
iii) 0.5-15% by weight of a compatibilizing agent selected from:

a) a polyarylenether terminated with at least one OH group;
b) a styrene-(butene-co-ethylene)-styrene block copolymer;
c) atactic polystyrene terminated with at least one amine, epoxy or hydroxy group;
d) syndiotactic polystyrene terminated with at least one amine, hydroxy or epoxy group;

iv) 0-1% by weight, preferably 0.001-0.5%, of a compound having general formula: $NR_1R_2R_3$.

Printed by Jouve, 75001 PARIS (FR)

**Description**

The present invention relates to polymeric compositions with a high toughness based on vinylaromatic polymers having a predominantly syndiotactic structure.

More specifically, the present invention relates to polymeric compositions with a high toughness based on polystyrene with a predominantly syndiotactic structure (sPS).

It is known that polystyrene, in particular forms with a high degree of syndiotacticity, which are susceptible to crystallization, offer an excellent chemical and thermal resistance but have a very low impact strength.

It is also known that atactic polystyrene can be easily modified into a highly impact-resistant form by grafting the growing polystyrene chain with butadiene.

This is not possible in the case of syndiotactic polystyrene (sPS) owing to the different conditions in which its polymerization takes place. It is therefore necessary to resort to an addition in a subsequent phase of the polymer synthesis and in particular to perform its mixing with a suitable elastomer using mono or multiscrew extruders.

The effectiveness of the mixing is associated with the affinity between the mixture components: the fragmentation of the dispersed phase is very difficult in the case of incompatible polymers, with very different surface tension and viscosity of the molten product, whereas copolymers or polymers modified so as to have a partial compatibility with the matrix (in this case syndiotactic polystyrene) have the quality of being effectively miscible therewith. This property can be easily verified by observing the dimensions of the particles dispersed in the matrix, and also by the appearance of the interface zones between the phases.

U.S. patent 5,395,890 describes compositions based on sPS (A) mixed with a very long series of polymers (B) defined as "incompatible" with sPS and optionally with elastomers (C) selected from styrene-butadiene block copolymers (SB, BSB, SEBS, SEPS, SEP), ethylenepropylene copolymers, styrene-isoprene block copolymers (SI, ISI, SIS), modified acrylic rubbers, etc. The compositions thus obtained appear to have improved Izod shock resistance.

U.S. patent 5,436,397 describes compositions based on sPS and an elastomeric component in which there is also a compatibilizing agent consisting of functionalized syndiotactic polystyrene capable of reacting with the elastomeric component. Examples of functionalized sPS comprise copolymers of styrene-p-methylstyrene or styrene-divinylbenzene or sPS terminated with glycidyl-methacrylate, sPS modified with maleic anhydride, or again styrene-divinylbenzene copolymers onto which glycidyl methacrylate or maleic anhydride is grafted by means of radicalic initiators.

Among the elastomers capable of reacting with the compatibilizing agent, SEPS and SIS copolymers and in particular SEBS or EPR copolymers modified with maleic anhydride or SEBS copolymer modified with epoxide, can be mentioned. The material thus prepared has improved Izod resistance and elongation to break without reducing the other characteristics such as elastic modulus and HDT.

The patent U.S. 5,412,024 describes formulates based on sPS terminated with polar groups and containing inorganic fillers. Non-modified sPS and elastomers of the type described above may also be present in the formulate.

The termination of syndiotactic polystyrene is produced by monomeric units containing both a polar group and a double or triple carbon-carbon bond.

The formulates thus prepared have excellent resistance to water, impact strength, thermal and mechanical resistance, with a good adhesion of the inorganic filler to the styrene matrix with a syndiotactic configuration.

Further examples of formulations based on syndiotactic polystyrene with improved mechanical properties are provided in U.S. patents 5,543,462 and 5,654,365 or in published international patent application WO 96-11,233.

Object of the present invention is to provide an additional type of polymeric composition with a high toughness based on vinylaromatic polymers with a predominantly syndiotactic structure.

More specifically, object of the present invention is to prepare formulates based on polymers or copolymers of styrene prevalently in syndiotactic form combined with a functionalized thermoplastic elastomer and with a compatibilizing copolymer particularly effective in improving the affinity between the mixture components.

The present invention therefore relates to polymeric compositions with a high toughness based on vinylaromatic polymers with a syndiotactic structure which comprise:

    i) 50-95% by weight, preferably 60-85%, of a vinylaromatic homopolymer or copolymer containing 80-100% of syndiotactic dyads and having a weight average molecular weight Mw ranging from 10,000 to 1,000,000;
    ii) 5-45% by weight, preferably 15-40%, of a polar elastomer comprising at least one (iso)alkylacrylate in which the (iso)alkyl group contains from 1 to 8 carbon atoms, containing a monomer having epoxy, anhydride and/or carboxylic functional groups;
    iii) 0.5-15% by weight, preferably 1-10%, of a compatibilizing agent selected from:

        a) a polyarylenether with a molecular weight ranging from 5,000 to 200,000 terminated with at least one hydroxy group, optionally modified by grafting with anhydrides or unsaturated acids containing from 3 to 12 carbon atoms;

b) a styrene-(butene-co-ethylene)-styrene block copolymer, obtained by the hydrogenation of styrene-butadiene-styrene copolymers, modified by grafting with anhydrides or unsaturated epoxides containing from 3 to 12 carbon atoms;

c) atactic polystyrene, having a weight average molecular weight ranging from 10,000 to 500,000, terminated with at least one amine, epoxy or hydroxy group;

d) syndiotactic polystyrene, having a weight average molecular weight Mw ranging from 10,000 to 500,000, terminated with at least one amine, hydroxy or epoxy group;

iv) 0-1% by weight, preferably 0.001-0.5%, of a compound capable of catalyzing the reactions between the functional groups of the polymeric composition selected from tertiary amines having the general formula:

$$NR_1R_2R_3$$

wherein $R_1$, $R_2$ and $R_3$ are $C_1$-$C_{25}$ (iso)alkyl, aromatic or alkylaromatic radicals, and organic salts of metals of groups I-III or of transition metals.

According to the present invention, the term "vinylaromatic homopolymer or copolymer" essentially and mainly refers to polystyrene. The definition also comprises, however, homopolymers such as poly p-methyl-styrene, poly m-methylstyrene, poly p-tertbutylstyrene, etc. or copolymers such as poly(styrene-co-p-methylstyrene), poly(styrene-co-m-methylstyrene), poly(styrene-co-p-methylstyrene-co-m-methylstyrene), etc.

These polymers have a syndiotactic configuration and are consequently prepared in the presence of particular catalytic systems and/or particular process conditions. For example, they can be prepared according to the processes described in published European patent applications 751,154, 770,630, 780,405, 796,875 and 838,481.

The vinylaromatic homopolymers or copolymers with a predominantly syndiotactic structure of the present invention can be used either pure or mixed with the corresponding atactic polymer in a quantity of up to 25% by weight.

The polar elastomers contain 50-100% by weight of (iso)alkylacrylate units selected, for example, from methyl acrylate, ethyl acrylate, propyl acrylate, isopropyl acrylate, butyl acrylate, pentyl acrylate, hexyl acrylate, etc. These elastomers can also contain up to 50% by weight of at least an additional monomeric unit selected from:

- methacrylic esters of aliphatic alcohols with a $C_1$-$C_8$ linear or branched chain, such as methyl methacrylate, ethyl methacrylate, propyl methacrylate, isopropyl methacrylate, butyl methacrylate, etc.;
- linear or branched $C_2$-$C_{10}$ alpha-olefins, optionally containing saturated or aromatic rings, such as ethylene, propylene, butene, isobutene, vinylcyclohexene, styrene, etc.;
- a $C_4$-$C_{10}$ diolefin such as butadiene, isoprene, 1,3-pentadiene, etc.

The acrylic elastomer is functionalized by polymerization with one or more of one of the following monomers having functional groups: acrylic acid, methacrylic acid, glycidyl acrylate, glycidyl methacrylate, maleic anhydride, itaconic anhydride, p-(glycidyloxy)styrene, etc., in such quantities that the functional unit ranges from 0.5 to 5% with respect to the total weight of the elastomer.

Preferred functionalized polar elastomers of the present invention are terpolymers containing, in addition to the acrylic unit, ethylene and glycidyl methacrylate or maleic anhydride. These products are known on the market and are sold under the trade-name of Lotader by ATOCHEM.

The compatibilizing agent of the composition of the present invention can be a polyarylenether (a) such as, for example, polyphenylenether, poly-(2,6-dimethyl) phenylenether (PPE), poly-(2,6-diethyl)phenylenether, etc. The preferred polymer is PPE.

The polyarylenether can also be modified, by grafting, with unsaturated anhydrides or acids such as, for example, maleic anhydride, itaconic anhydride, acrylic acid, methacrylic acid, etc. Polyarylenethers thus prepared are described, for example, in Polymer Engineering and Science, vol. 30 (1990), page 1056.

The styrene-(butene-co-ethylene)-styrene block copolymer (b) is obtained by the hydrogenation of styrene-butadiene-styrene copolymers and is modified by grafting with an unsaturated anhydride selected, for example, from maleic or itaconic anhydride (polymers of this type are sold under the trade-name of Kraton) or with an unsaturated epoxide selected, for example, from glycidyl acrylate or methacrylate, allyl glycidyl ether, etc.

The atactic polystyrene terminated with amine, epoxy or hydroxy groups (c) can be obtained by means of anionic polymerization, as described by Quirk and Hsieh in the volume "Anionic Polymerization", Marcel Dekker Inc. (New York), 1996.

The syndiotactic polystyrene terminated with amine, hydroxy or epoxy groups (d) can be prepared, for example, according to what is described in published European patent applications 570,931 and 570,932.

The compound capable of catalyzing reactions between the functional groups of the polymeric composition can be used in a quantity of up to 1%, when component (iii) belongs to the subtype (c), or up to 0.5% when it belongs to subtypes (a), (b), (d). These compounds are described for example in Advances in Polymer Science, vol. 71 (1980), page 154. Particularly suitable examples of compounds of this type are tertiary amines, such as dimethylstearylamine, or chromium salts such as acetylacetonate or stearate, or mixtures of tertiary amines and metal salts (aluminum laurate, lithium stearate, chromium acetylacetonate, etc.).

Optionally, suitable nucleating agents to control the crystallization of the material, inorganic reinforcement fillers, such as mica, kaolin, glass fibre, carbon fibre, etc., stabilizers to prevent thermal, oxidative and photochemical degradation, etc., can also be added to the formulations in question.

Some illustrative but non-limiting examples are provided hereunder for a better understanding of the present invention and for its embodiment.

REFERENCE EXAMPLE

37.8 kg of styrene purified by passage on a basic alumina column and 115 g of solid methylaluminoxane were introduced in an inert atmosphere into a 70 litre glass reactor. The mixture was heated under stirring to 40°C and 1.438 g of cyclopentadienyltitanium trichloride dissolved in 150 ml of anhydrous toluene were added.

After two hours of reaction, during which the temperature spontaneously rose to 55°C and then gradually dropped, the reaction was interrupted by the addition of 100 g of sodium hydroxide dissolved in 15 litres of methanol.

The solid obtained was filtered, suspended in methanol, and filtered again. After drying under vacuum (30 torr) at 80°C 7.8 kg of polymeric product were obtained.

To eliminate the atactic fraction, the polymer was extracted with methylethylketone at the boiling temperature for 15 hours, producing, after drying, syndiotactic polystyrene (sPS) in an amount equal to 87% of the starting product.

COMPARATIVE EXAMPLE 1

Syndiotactic polystyrene obtained according to the reference example was granulated by means of a Haake TW-100 laboratory counter-rotating twin-screw extruder. The extruder, equipped with a screw having a flat conical geometry and a die with an internal diameter of 3 mm, was used to produce granules of material suitably shaped for feeding an Arburg CMD 170 injection press and producing test-samples according to ASTM D638 and ASTM D256 respectively for evaluations of the mechanical properties relating to tensile stress and impact-resistance. The mechanical characteristics of syndiotactic polystyrene are indicated in Table 1.

COMPARATIVE EXAMPLE 2

100 parts by weight of a mixture containing 70% of syndiotactic polystyrene obtained according to the reference example and 30% of an ethylene-acrylate-glycidylmethacrylate terpolymer (Lotader AX 8900 Atochem) were mixed and moulded according to the procedure described in comparative example 1. The mechanical characteristics of the composition are indicated in Table 1.

COMPARATIVE EXAMPLE 3

100 parts by weight of a mixture containing 97.5% of syndiotactic polystyrene and 2.5% of poly(phenylenether) (PPE H51 Mitsubishi) were transformed according to the procedure illustrated in comparative example 1. The mechanical characteristics of the composition are indicated in Table 1.

COMPARATIVE EXAMPLE 4

Samples prepared according to the procedure illustrated in comparative example 1 were prepared and evaluated, by mixing 70 parts by weight of sPS, 25 parts of an ethylene-acrylate-glycidylmethacrylate terpolymer (Lotader AX 8900) and 2.5 parts of poly(phenylene ether). The mechanical characteristics of the composition are indicated in Table 1.

COMPARATIVE EXAMPLE 5

Samples prepared according to the procedure illustrated in comparative example 1 were prepared and evaluated, by mixing 70 parts by weight of sPS, 25 parts of Lotader AX 8900 terpolymer and 5 parts of a styrene-(ethylene-butene)-styrene block copolymer grafted with maleic anhydride (Kraton FG1901X Shell). The mechanical characteristics of the composition are indicated in Table 1.

COMPARATIVE EXAMPLE 6

100 parts by weight of a mixture containing 65% by weight of sPS, 30% by weight of EPDM grafted with maleic anhydride (Royaltuf 465 Uniroyal) and 5% by weight of PPE (trade-name PPE H51-Mitsubishi), were fed to a twin-screw extruder, granulated and moulded according to the procedure described in comparative example 1. The mechanical characteristics of the composition are indicated in Table 1.

EXAMPLE 7

The procedure described in comparative example 3 was repeated but adding 0.12% by weight of N,N-dimethylstearylamine to the mixture in the extruder. The mechanical characteristics of the composition are indicated in Table 1.

EXAMPLE 8

The formulation described in example 1 was repeated with the difference that 0.12% of chromium acetylacetonate was used as catalyst instead of the amine. The mechanical characteristics of the composition are indicated in Table 1.

EXAMPLE 9

The same procedure was adopted as described in comparative example 5 but adding 0.12% by weight of N, N-dimethylstearylamine to the mixture in the extruder. The mechanical characteristics of the composition are indicated in Table 1.

EXAMPLE 10

The formulation described in comparative example 2 was repeated with the difference that part of the syndiotactic polystyrene was substituted with a polystyrene terminated with amine groups having a molecular weight of 60,000. A quantity equal to 2.5% of this reactive polymer was used with respect to the total weight. The mechanical characteristics of the composition are indicated in Table 1.

Table 1

| Example | Elastic modulus [MPa] | Tensile strength [MPa] | Elong. to break [%] | Impact strength [J/m] |
|---|---|---|---|---|
| 1 | 3690 | 42 | 1.2 | 8 |
|   | (4150) | (59) | (1.8) | (13) |
| 2 | 2350 | 29 | 1.9 | 45 |
|   | (2700) | (30) | (1.6) | (30) |
| 3 | 3700 | 43 | 2.2 | 16 |
|   | (4200) | (60) | (2.1) | (12) |
| 4 | 2340 | 29 | 1.9 | 48 |
|   | (2700) | (31) | (1.7) | (30) |
| 5 | 2350 | 29 | 1.9 | 45 |
|   | (2750) | (31) | (1.6) | (27) |
| 6 | 2630 | 30 | 1.4 | 32 |
|   | (2860) | (33) | (1.6) | (27) |
| 7 | 2490 | 31 | 2.5 | 114 |
|   | (2860) | (34) | (1.9) | (52) |
| 8 | 2500 | 30 | 3.0 | 105 |
|   | (2740) | (33) | (1.9) | (61) |
| 9 | 2390 | 32 | 3.1 | 125 |
|   | (2750) | (33) | (2.0) | (62) |

Table 1   (continued)

| Example | Elastic modulus [MPa] | Tensile strength [MPa] | Elong. to break [%] | Impact strength [J/m] |
|---|---|---|---|---|
| 10 | 2400 | 31 | 3.0 | 100 |
| | (2800) | (32) | (2.0) | (55) |

* The values in brackets refer to samples obtained by injection moulding test samples with the mould at 100°C and subsequent annealing at 150°C.

**Claims**

1. Polymeric compositions with a high toughness based on vinylaromatic polymers having a predominantly syndiotactic structure which comprise:

   i) 50-95% by weight of a vinylaromatic homopolymer or copolymer containing 80-100% of syndiotactic dyads and having a weight average molecular weight Mw ranging from 10,000 to 1,000,000;
   ii) 5-45% by weight of a polar elastomer comprising at least one (iso)alkylacrylate in which the (iso)alkyl group contains from 1 to 8 carbon atoms, containing a monomer having epoxy, anhydride and/or carboxy functional groups;
   iii) 0.5-15% by weight of a compatibilizing agent selected from:

   a) a polyarylenether with a molecular weight ranging from 5,000 to 200,000 terminated with at least one hydroxy group, optionally modified by grafting with anhydrides or unsaturated acids containing from 3 to 12 carbon atoms;
   b) a styrene-(butene-co-ethylene)-styrene block copolymer, obtained by the hydrogenation of styrene-butadiene-styrene copolymers, modified by grafting with anhydrides or unsaturated epoxides containing from 3 to 12 carbon atoms;
   c) atactic polystyrene, having a weight average molecular weight ranging from 10,000 to 500,000, terminated with at least one amine, epoxy or hydroxy group;
   d) syndiotactic polystyrene, having a weight average molecular weight Mw ranging from 10,000 to 500,000, terminated with at least one amine, hydroxy or epoxy group;

   iv) 0-1% by weight of a compound capable of catalyzing the reactions between the functional groups of the polymeric composition selected from tertiary amines having the general formula:

$$NR_1R_2R_3$$

   wherein $R_1$, $R_2$ and $R_3$ are $C_1$-$C_{25}$ (iso)alkyl, aromatic or alkylaromatic radicals, and organic salts of metals of groups I-III or of transition metals.

2. The compositions according to claim 1, wherein the vinylaromatic homopolymers or copolymers with a predominantly syndiotactic structure are used pure or mixed with the corresponding atactic polymer in a quantity of up to 25% by weight.

3. The compositions according to claim 1 or 2, wherein the polar elastomers contain 50-100% by weight of (iso)alkylacrylate units.

4. The compositions according to any of the previous claims, wherein the polar elastomer contains the functional unit in a quantity ranging from 0.5 to 5% with respect to the total weight of the elastomer.

5. The compositions according to any of the previous claims, wherein the compound (iv) is used in a quantity of up to 1%, when component (iii) belongs to subtype (c), or up to 0.5% when it belongs to subtypes (a), (b), (d).

**EP 0 978 536 A1**

## EUROPEAN SEARCH REPORT

Application Number

EP 99 11 4051

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 775 728 A (IDEMITSU PETROCHEMICAL CO) 28 May 1997 (1997-05-28) * page 3, line 38 - page 4, line 8 ; page 7, line 4 ; page 5, line 22-55 ; page 6, line 54 - page 7, line 26 ; page 7, line 33-34 ; page 8, line 31-40 * * abstract * | 1-5 | C08L25/06 C08L51/00 C08K5/17 C08K5/09 |
| X | EP 0 608 007 A (IDEMITSU KOSAN CO) 27 July 1994 (1994-07-27) * page 2, line 48 - page 3, line 21 ; page 8, line 4-6 ; page 3, line 27 * * abstract * | 1-4 | |
| X | US 5 760 105 A (OKADA AKIHIKO ET AL) 2 June 1998 (1998-06-02) * column 3, line 6-60 ; column 7, line 8-9 ; column 8, line 1 - column 11, line 60 * * column 4, line 60-64 * | 1,2,5 | |
| X | EP 0 771 833 A (IDEMITSU PETROCHEMICAL CO) 7 May 1997 (1997-05-07) * page 4, line 40 - page 5, line 7 ; page 5, line 27-28 ; page 3, line 25-54 ; page 5, line 18-33 * * abstract * | 1-4 | TECHNICAL FIELDS SEARCHED (Int.Cl.7) C08L C08F C08G |
| X | EP 0 767 211 A (IDEMITSU PETROCHEMICAL CO) 9 April 1997 (1997-04-09) * page 3, line 19-44 ; page 8, line 37 ; page 4, line 53 - page 5, line 20 * * page 6, line 59 - page 8, line 1 * | 1-5 | |
| X | EP 0 787 762 A (IDEMITSU PETROCHEMICAL CO) 6 August 1997 (1997-08-06) * page 5, line 52 - page 6, line 14 ; page 6, line 38 * * page 8, line 7-34 * | 1,2 | |

-/--

The present search report has been drawn up for all claims

| Place of search | Date of completion of the search | Examiner |
|---|---|---|
| THE HAGUE | 12 October 1999 | Hammond, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 99 11 4051

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 583 484 A (IDEMITSU KOSAN CO) 23 February 1994 (1994-02-23) * page 3, line 8-30 ; page 3, line 37 * * page 4, line 1-38 * ----- | 1-3 | |

TECHNICAL FIELDS SEARCHED (Int.Cl.7)

The present search report has been drawn up for all claims

| Place of search | Date of completion of the search | Examiner |
|---|---|---|
| THE HAGUE | 12 October 1999 | Hammond, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**   EP 99 11 4051

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-1999

| Patent document cited in search report | | Publication date | Patent family member(s) | | Publication date |
|---|---|---|---|---|---|
| EP 0775728 | A | 28-05-1997 | JP | 8319385 A | 03-12-1996 |
| | | | WO | 9637552 A | 28-11-1996 |
| EP 0608007 | A | 27-07-1994 | JP | 2869098 B | 10-03-1999 |
| | | | JP | 3126743 A | 29-05-1991 |
| | | | JP | 2869099 B | 10-03-1999 |
| | | | JP | 3126744 A | 29-05-1991 |
| | | | AT | 184304 T | 15-09-1999 |
| | | | AU | 628651 B | 17-09-1992 |
| | | | AU | 6304690 A | 18-04-1991 |
| | | | CA | 2027497 A | 14-04-1991 |
| | | | CN | 1050886 A,B | 24-04-1991 |
| | | | EP | 0422495 A | 17-04-1991 |
| | | | KR | 118104 B | 30-09-1997 |
| | | | RU | 2011665 C | 30-04-1994 |
| | | | RU | 2066681 C | 20-09-1996 |
| | | | US | 5219940 A | 15-06-1993 |
| | | | US | 5777021 A | 07-07-1998 |
| US 5760105 | A | 02-06-1998 | JP | 7048487 A | 21-02-1995 |
| | | | JP | 7048488 A | 21-02-1995 |
| EP 0771833 | A | 07-05-1997 | JP | 8311196 A | 26-11-1996 |
| | | | WO | 9636658 A | 21-11-1996 |
| EP 0767211 | A | 09-04-1997 | CA | 2184778 A | 09-03-1997 |
| | | | CN | 1152001 A | 18-06-1997 |
| | | | DE | 69602150 D | 27-05-1999 |
| | | | DE | 69602150 T | 02-09-1999 |
| | | | JP | 9132686 A | 20-05-1997 |
| | | | US | 5902850 A | 11-05-1999 |
| EP 0787762 | A | 06-08-1997 | JP | 9041151 A | 10-02-1997 |
| | | | JP | 9087455 A | 31-03-1997 |
| | | | JP | 9221573 A | 26-08-1997 |
| | | | CN | 1159201 A | 10-09-1997 |
| | | | WO | 9705192 A | 13-02-1997 |
| EP 0583484 | A | 23-02-1994 | JP | 5247292 A | 24-09-1993 |
| | | | WO | 9318087 A | 16-09-1993 |
| | | | US | 5391611 A | 21-02-1995 |

EPO FORM P0459

For more details about this annex : see Official Journal of the European Patent Office, No. 12/82